# DEMANDE DE BREVET EUROPEEN

(11) **EP 0 578 593 A1**
(43) Date de publication de la demande: **12.01.1994**
(21) Numéro de dépôt: 93420290.4
(22) Date de dépôt: 05.07.1993
(51) Int. Cl.: B60P 1/64

(54) **Dispositif perfectionné de levage et de manutention de charges, containers et similaires**

(30) Priorité: 06.07.1992 FR 9208748
(71) Demandeur: Boudrot, Charles, F-13003 Marseille (FR)
(72) Inventeur: Boudrot, Charles, F-13003 Marseille (FR)
(74) Mandataire: Dupuis, François

(57) **Abrégé**

Le dispositif comprend à partir d'un châssis porteur (1) quatre montants verticaux (2-3-4-5) disposés en regard deux à deux en délimitant entre eux des espaces (E1-E2) perpendiculaires entre eux, pour le passage, articulation et basculement d'une flêche (6) télescopique dont l'extrémité reçoit des moyens de levage et manutention de charges, ladite flêche étant déplacée, en étant disposée dans la partie commune et centrale des espaces (E1-E2), dans un plan vertical par un couple de vérins opposés (7-8), pénétrant dans l'espace (E1) et montés articulés par rapport au châssis porteur, ladite flêche étant basculée dans un plan latéral en pénétrant dans l'espace (E1), jusqu'à prendre une position horizontale, sous l'action de l'un des deux vérins (7-8) l'autre restant inactif, et en ce que l'extrémité inférieure de la flêche est associée par un axe d'articulation (13) traversant l'espace (E2), associé à une structure d'encadrement entourant partiellement les montants (2-3-4-5) pour assurer la stabilité et le verrouillage en position de ladite flêche, et en accompagnant son déplacement le long des montants.

## Description

L'invention se rattache au secteur technique des matériels et équipements de levage et transfert de charges du type containers, caisses mobiles et similaires, d'une zone de stockage sur un véhicule transporteur ou vice-versa.

On connaît déjà de nombreux dispositifs de manutention permettant le déplacement et transfert de charges, ces dispositifs étant positionnés sur des ensembles routiers du type comprenant un semi-remorque ou similaire. Ces ensembles sont souvent complexes et d'un coût de revient élevé en nécessitant des aménagements particuliers au sol qui permettent leur évolution. En outre, ces ensembles sont souvent limités à la préhension de charges, selon une orientation angulaire définie, limitée dans le plan, et ne permettant pas un prélèvement sur un espace angulaire de 360° par rapport au plan du portique de levage.

On connaît également un engin auto-chargeur pour prendre et déposer au sol, et vice-versa, des containers. Ce matériel à commande hydraulique est constitué d'un mât télescopique, situé derrière la cabine du véhicule, ce mât étant équipé d'une membrure transversale agencée avec deux verrous pour prendre en bout à l'extrémité supérieure opposée, à l'ouverture des portes, les containers et les faire basculer d'environ 45°. Cette phase est effectuée simultanément avec l'inclinaison du châssis du véhicule, selon une même inclinaison.

Dans cette mise en oeuvre, la dépose du container s'effectue simultanément avec un mouvement combiné du véhicule.

L'inconvénient majeur de ce système réside essentiellement dans l'inclinaison du container lors de la pose au sol qui exige des obligations d'arrimage très spécifiques et coûteuses entraînant l'utilisation de moyens de sécurité complémentaires pour assurer la stabilité au sol.

On connaît également des engins auto-chargeur de containers spécialement conçus et équipés de crochets à mouvements hydrauliques situés à l'extrémité opposée à son ouverture et permettant son halage sur un chemin de roulement équipant le véhicule porteur. La prise du container s'effectue à 45°, latéralement au wagon, par le pivotement d'une plateforme équipant spécialement le wagon.

Ce type de matériel est limité à la manutention de charges entre wagon et sol, sans possibilité de gerbage, ce qui limite considérablement ses possibilités d'utilisation.

On connaît également un engin auto-stable à manutention frontale très performant qui permet notamment le gerbage de containers sur quatre niveaux mais dont le poids (à vide : 45 T, en charge : 80 T), le pénalise car ce poids implique des sols renforcés dont l'aménagement va jusqu'à cinq fois le prix de l'engin qui est déjà très élevé. De plus, son transport en usine pour réparation ou dans un autre site d'utilisation oblige un démontage important et un transport exceptionnel avec les contraintes que cela comporte.

Le but recherché selon l'invention était de concevoir un dispositif perfectionné qui réponde de manière satisfaisante aux différents critères recherchés et permettant un transport dans de bonnes conditions de sécurité.

Un autre but selon l'invention était de proposer un dispositif adapté sur semi-remorque pouvant être déplacé à vide ou peu chargé, d'un gabarit routier pour désservir des sites dont l'activité ne pourrait pas amortir à un équipement lourd, tel que portique, et très coûteux.

Un autre but recherché selon l'invention était de proposer un dispositif qui soit exempt des contraintes d'environnement liées aux zones de pose et dépose des containers.

Selon une première caractéristique de l'invention, le dispositif comprend à partir d'un châssis porteur quatre montants verticaux disposés en regard deux à deux en délimitant entre eux des espaces perpendiculaires entre eux, définissant une forme en croix, pour le passage, articulation et basculement d'une flêche télescopique dont l'extrémité reçoit des moyens de levage et manutention de charges, ladite flêche étant déplacée, en étant disposée dans la partie centrale de la croix, dans un plan vertical par un couple de vérins opposés, pénétrant dans l'espace et montés articulés par rapport au châssis porteur, ladite flêche étant basculée dans un plan latéral en pénétrant dans l'espace, jusqu'à prendre une position horizontale, sous l'action de l'un des deux vérins l'autre restant inactif, et en ce que l'extrémité inférieure de la flêche est associée par un axe d'articulation traversant l'espace, associé à une structure d'encadrement entourant partiellement les montants pour assurer la stabilité et le verrouillage en position de ladite flêche, et en accompagnant son déplacement le long des montants.

Ces caractéristiques et d'autres encore ressortiront bien de la suite de la description.

Pour fixer l'objet de l'invention illustrée d'une manière non limitative aux dessins où :
- la figure 1 est une vue à caractère schématique illustrant le dispositif selon l'invention dans sa mise en oeuvre, le dispositif est en disposition haute en vue de son utilisation,
- la figure 2 est une vue à caractère schématique du dispositif en position basse,
- la figure 3 est une vue selon la figure 1 montrant le basculement de la flêche du dispositif en vue de la pose ou de la saisie de container au sol,

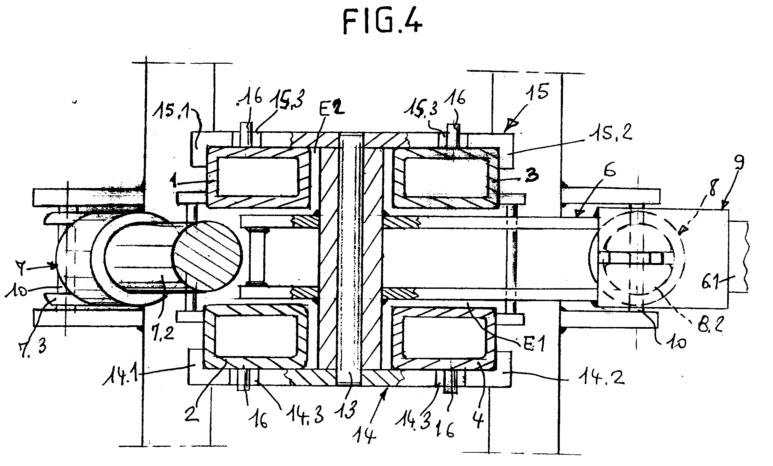

- la figure 4 est une vue de dessus en coupe selon la ligne A.A de la figure 3,

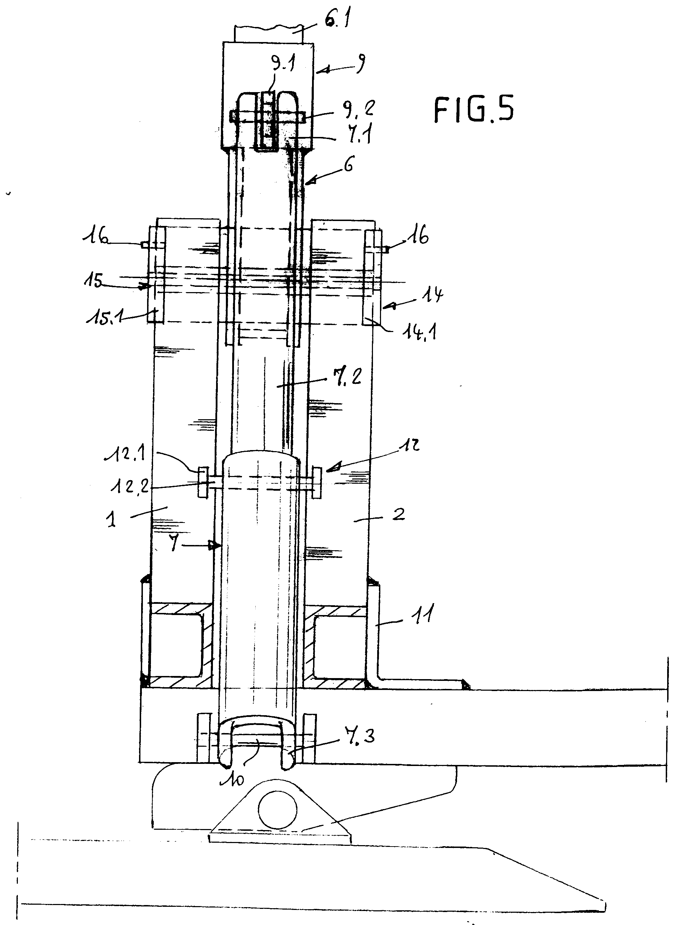

- la figure 5 est une vue de côté selon la figure 1.

Afin de rendre plus concret l'objet de l'invention, on le décrit maintenant d'une manière non limitative illustrée aux figures des dessins.

Le dispositif de manutention, selon l'invention, est disposé sur un châssis porteur référencé dans son ensemble par 1, disposé et fixé de toute manière appropriée, soit directement, soit de manière rapportée, à une plateforme constitutive du semi-remorque ou ensemble routier de transport.

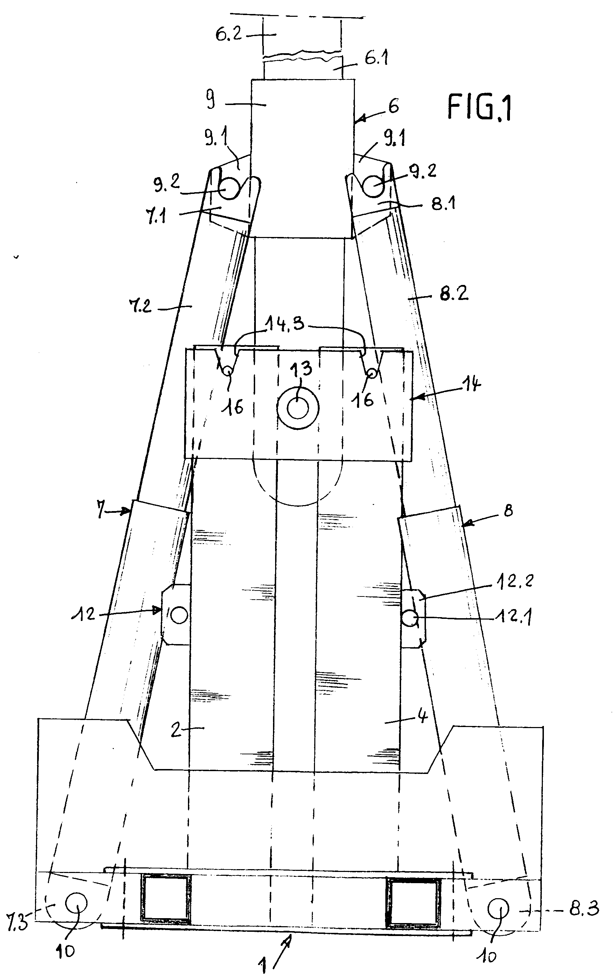

Le dispositif de manutention comprend essentiellement quatre montants (2,3,4,5) verticaux, disposés en regard deux à deux, en délimitant entre eux des espaces (E1-E2) perpendiculaires entre eux, définissant une forme en croix pour le passage, articulation et basculement d'une flêche (6) télescopique, déplacée par un couple de deux vérins (7-8) montés articulés au châssis porteur (1) par leurs extrémités intérieures. Lesdits montants sont maintenus verticalement par tout moyen approprié, solidarisés au châssis, avec équerre de retenue (11) ou équivalent. Lesdits vérins sont disposés de manière à pénétrer dans l'espace (E-1) précité, défini entre les montants (2-3) et (4-5) respectivement. Le corps de la flêche est ainsi introduit par sa partie inférieure dans la partie centrale en croix, ledit espace (E1) autorisant le basculement de la flêche de 90°, à droite ou à gauche, par rapport au plan vertical. Ladite flêche reçoit ainsi dans sa partie supérieure un manchon (9) à position fixe et présentant latéralement des ailettes (9.1) disposées en regard des vérins (7-8). Lesdites ailettes sont pourvues de barres (9.2) susceptibles de constituer des plans d'appui des extrémités (7.1-8.1), en forme de fourchette, établies à la partie extérieure des tiges (7.2-8.2) desdits vérins (7-8). Les vérins (7-8) sont articulés à leur extrémité inférieure (7.3-8.3) sur des axes (10) disposés sur le châssis. Le déplacement vertical de la flêche (6) est ainsi obtenu par le développement des tiges des vérins (7-8). En position rentrée des tiges, la flêche se situe en partie basse engagée complètement dans la partie centrale en croix, établie entre les montants (2-3-4-5). Ladite flêche peut présenter elle-même par son extrémité libre (6.1) un élément télescopique (6.2) susceptible de recevoir tout moyen d'accrochage de la charge, du container, ou caisse mobile, à déplacer. Selon une autre disposition, les montants (2-3-4-5) sont agencés dans leur partie inférieure en regard des vérins (7-8) avec des supports d'appui (12) profilés susceptibles de constituer des plans d'appui des corps des vérins, notamment en situation de développement maximum, ainsi qu'il apparaît figure 1 des dessins. Plus particulièrement, ces supports (12) comprennent une partie barre d'appui (12.1) disposée en prolongement extérieur de l'espace (E1) et étant maintenue par des flasques (12.2) solidarisés au chant en regard des montants. L'extrémité inférieure de la flêche (6) est par ailleurs agencée pour recevoir un axe (13) traversant l'intégralité de l'espace (E2) pour autoriser la fixation dans des plans latéraux extérieurs d'une structure d'encadrement et de guidage constituée de deux plaques entretoises (14-15) profilées venant ainsi entourer lesdits montants. Lesdites plaques présentent des rabats (14.1-14.2) et (15.1-15.2) sont susceptibles de prendre appui et coulisser le long des chants latéraux des montants en regard. Le profil des plaques (14-15) permet ainsi de définir un encadrement autour des montants évitant le basculement des plaques et autorisant leur seul coulissement dans un plan vertical. Ces plaques entretoises se déplacent le long des montants lors du mouvement d'abaissement ou de relevage de la flêche. Afin de limiter le déplacement de celle-ci, il est prévu près des extrémités supérieures des montants, en regard des plaques entretoises, des doigts ou prolongements (16) constituant des butées de fin de course et de verrouillage. Les plaques entretoises (14-15) sont ainsi agencées dans leur partie supérieure avec un nombre d'échancrures profilées (14.3-15.3) en nombre correspondant aux butées, et formant siège pour celles-ci, lors du relevage maximum de la flêche. Il y a donc un effet de verrouillage, de l'extrémité inférieure de la flêche, combiné avec le double appui des vérins (7-8) sur le manchon à ailettes.

L'extrémité de la flêche est susceptible d'autoriser la fixation de tout moyen approprié pour la préhension des containers et similaires, tels que crochets, cadres, et tout moyen bien connu de l'état de la technique.

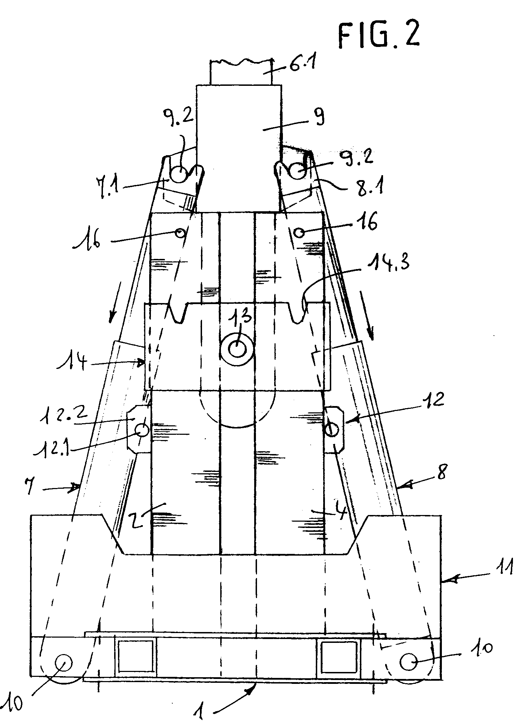

Le fonctionnement est alors le suivant. En situation de transport (figure 2), les vérins (7-8) ont leur tige rétractée et la flêche (6) se situe en position verticale inférieure basse. Les vérins sont en appui sur les supports (12), disposés dans la partie basse des montants.

En position d'arrêt (figure 1) du semi-remorque ou équivalent, porteur du dispositif, les deux vérins (7-8) sont mis en actionnement de sorte à déplacer vers le haut la flêche (6) précitée, les tiges des vérins, par leur extrémité en fourchette, assurant le développement et l'effort de poussée.

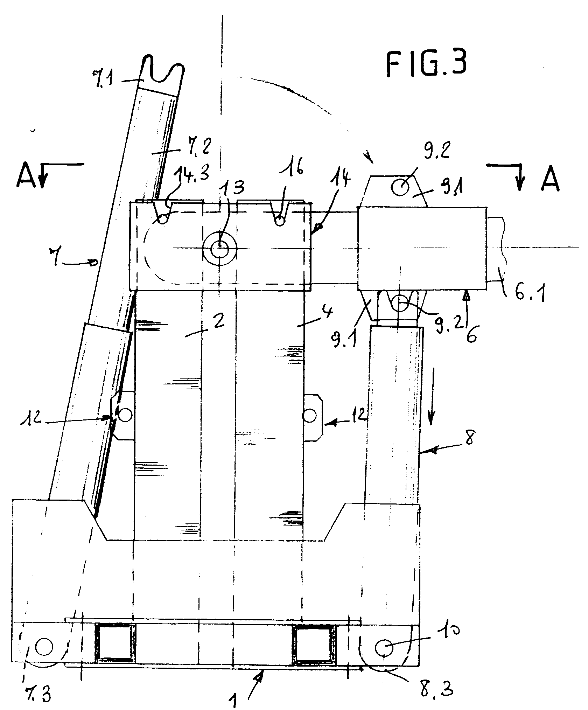

La phase suivante (figure 3) consiste à faire basculer la flêche, selon une orientation angulaire de 90°, latéralement. A cet effet, l'un des deux vérins (7 ou 8) situé du côté d'abaissement de la flêche est soumis à un double mouvement, d'une part d'une rétraction régulière et contrôlée de sa tige, et d'autre part d'articulation de son fût par rapport à son axe de pivotement inférieur, jusqu'à prendre une position horizontale. Lors du basculement, le second vérin devient inactif par échappement de la tige (7.2 ou 8.2) du siège en forme de fourchette, et le vérin reste en appui contre le plan support (12) établi dans la partie inférieure des manchons en regard. Le mouvement de la flêche et son basculement est par ailleurs limité par l'effet de retenue et de blocage en position des plaques (14-15) formant encadrement et faisant ainsi un contre-appui de l'extrémité de la flêche par rapport à la zone d'appui ou du vérin (8) sollicité. En situation d'abaissement de la flêche, le vérin sollicité prend une position verticale. L'utilisateur procède ensuite aux différentes manipulations avec tout moyen approprié disposé en bout de la flêche pour permettre la pose ou la dépose des containers, caisses mobiles et similaires.

Lorsque les opérations ont été effectuées, la flêche est relevée par développement progressif de la tige du vérin sollicité. Lors de ce relevage, le vérin est soumis à un basculement angulaire par rapport à son axe pour venir reprendre sa position initiale correspondant à celle de l'autre vérin. La flêche par son manchon vient finalement en centrage et appui sur l'extrémité profilée en fourchette du second vérin, assurant alors un blocage en position.

Il est évident que les moyens de commande sont utilisés pour mettre en oeuvre avec la plus grande sécurité possible, le fonctionnement des dispositifs, des capteurs étant utilisés pour contrôler et définir les différentes positions des éléments constitutifs du dispositif.

Les avantages ressortent bien de l'invention et on souligne en particulier la nouvelle conception de l'ensemble, son application aisée pour le soulèvement de toute charge, dans toutes orientations angulaires sans être gêné par le positionnement relatif de l'ensemble routier support du dispositif par rapport à la zone de pose des produits et charges. On notera également que les vérins (7 et 8) sont en fonctionnement alternatif, selon l'orientation angulaire de basculement donnée à la flêche.

Le choix des vérins est établi pour assurer en toute sécurité les différents mouvements de la flêche.

La stabilisation de l'ensemble pour empêcher son basculement au cours des opérations de relevage ou de dépose est du type classique. Les patins d'appui sont compatibles avec les charges admissibles des sols des zones d'activité où évoluent ces matériels.

## Revendications

**1 -** Dispositif perfectionné de levage et manutention de charges, containers et similaires, susceptible de s'appliquer sur une plateforme support associée à un ensemble routier, caractérisé en ce que le dispositif comprend à partir d'un châssis porteur (1) quatre montants verticaux (2-3-4-5) disposés en regard deux à deux en délimitant entre eux des espaces (E1-E2) perpendiculaires entre eux, pour le passage, articulation et basculement d'une flêche (6) télescopique dont l'extrémité reçoit des moyens de levage et manutention de charges, ladite flêche étant déplacée, en étant disposée dans la partie commune et centrale des espaces (E1-E2), dans un plan vertical par un couple de vérins opposés (7-8), pénétrant dans l'espace (E1) et montés articulés par rapport au châssis porteur, ladite flêche étant basculée dans un plan latéral en pénétrant dans l'espace (E1), jusqu'à prendre une position horizontale, sous l'action de l'un des deux vérins (7-8) l'autre restant inactif, et en ce que l'extrémité inférieure de la flêche est associée par un axe d'articulation (13) traversant l'espace (E2), associé à une structure d'encadrement entourant partiellement les montants (2-3-4-5) pour assurer la stabilité et le verrouillage en position de ladite flêche, et en accompagnant son déplacement le long des montants.

**2 -** Dispositif selon la revendication 1, caractérisé en ce que la flêche (6) reçoit dans sa partie supérieure un manchon (9) à position fixe présentant latéralement des ailettes (9.1) disposées en regard des vérins (7-8), lesdites ailettes étant aménagées avec des plans d'appui profilés (9.2) susceptibles de coopérer avec les extrémités (7.1-8.1) en forme de fourchette établie à la partie extérieure des tiges des vérins, leur coopération permettant sous l'action de développement ou de retrait des tiges de vérins les mouvements de la flêche.

**3 -** Dispositif selon la revendication 2, caractérisé en ce que les vérins sont articulés en leur extrémité inférieure (7.3-8.3) sur des axes (10) disposés sur le châssis.

**4 -** Dispositif selon les revendications 1 et 2, caractérisé en ce que les montants (2-3-4-5) sont agencés dans leur partie inférieure en regard des vérins (7-8) avec des supports d'appui (12) profilés, susceptibles de constituer des plans d'appui des corps des vérins. Cesdits plans d'appui étant disposés en prolongement extérieur latéral de l'espace (E1).

**5 -** Dispositif selon la revendication 4, caractérisé en ce que les supports d'appui (12) sont constitués par des barres (12.1) montées entre deux flasques (12.2) solidarisées sur les chants des montants, et permettant ainsi l'appui des corps des vérins et le passage de leur tige dans le volume supérieur de l'espace (E1).

**6 -** Dispositif selon l'une quelconque des revendications 1 à 5, caractérisé en ce que l'extrémité inférieure de la flêche (6) est agencée pour recevoir un axe (13) traversant l'intégralité de l'espace (E2) pour autoriser la fixation dans des plans extérieurs latéraux une structure d'encadrement et de guidage comprenant deux plaques entretoises (14-15) entourant les montants (2-3-4-5) à l'exclusion des zones définies par les espaces (E1-E2), ladite structure coopérant avec des moyens (16) formant butée et limiteur de course disposés près des extrémités supérieures des montants et permettant le blocage en position de la structure, celle-ci assurant par verrouillage et contre-appui la retenue de la flêche.

**7 -** Dispositif selon la revendication 6, caractérisé en ce que les plaques entretoises (14-15) présentent une pluralité d'échancrures profilées (14.3-15.3) susceptibles de recevoir des moyens de butée (16) établis sur les montants, lesdites plaques présentant des rabats (14.1-14.2, 15.1-15.2) coulissant le long des chants latéraux des montants en regard.
